# EUROPÄISCHE PATENTSCHRIFT

(11) **EP 1 580 176 B1**
(45) Veröffentlichungstag und Bekanntmachung des Hinweises auf die Patenterteilung: **05.10.2011**
(21) Anmeldenummer: 05006722.2
(22) Anmeldetag: 29.03.2005
(51) Int. Cl.: C04B 28/02, C04B 40/00, C04B 22/06, C04B 24/04

(54) **Verfahren zum Beschleunigen des Abbindens eines Zements, insbesondere Spritzbetons, und Abbinde-Beschleuniger**
Method for accelerating the setting of a cement, in particular of sprayable concrete and cement set-accelerator
Procédé pour accélérer la prise de ciment, notamment de beton projété et accélérateur de prise

(30) Priorität: 26.03.2004 DE 102004016127
(43) Veröffentlichungstag der Anmeldung: 28.09.2005
(73) Patentinhaber: ROMBOLD & GFRÖHRER GmbH & CO. KG, 71254 Ditzingen (DE)
(72) Erfinder: MÜLLER, Burkhard, 71254 DITZINGEN (DE)
(74) Vertreter: Graf Glück Habersack Kritzenberger

(56) Entgegenhaltungen:
- EP-A- 0 076 927
- EP-A- 0 742 179
- EP-A- 1 167 317
- EP-A- 1 172 343
- WO-A-98/18740

## Beschreibung

Die vorliegende Erfindung betrifft ein Verfahren zum Beschleunigen des Abbindens von Zementen, insbesondere Spritzbeton. Die Menge und die Zusammensetzung eines Abbinde-Beschleunigers muss auf den jeweiligen Zement eingestellt werden. Mit anderen Worten, die erreichbare Erstarrungsbeschleunigung ist stark von den Eigenschaften des Zements abhängig, unter anderem auch von dem w/z-Wert, also dem Verhältnis von Wasser zu Zement und der Umgebungstemperatur.

Auch die Umgebungstemperaturen haben einen großen Einfluss auf das Abbindeverhalten des Zements und damit auf die notwendige Beschleunigerdosierung. So ist zum Beispiel während der kalten Jahreszeit eine höhere Beschleunigerzugabe notwendig als in den warmen Monaten.

Die WO 98/18740 A offenbart einen einkomponentigen, flüssigen Erstarrungs- und Erhärtungsbeschleuniger für hydraulische Bindemittel, bestehend aus a) basische Aluminiumsalze und/oder Aluminiumhydroxyd, b) Aluminiumsulfat und/oder Schwefelsäure, c) organische Carbonsäuren oder Mischungen zumindest zwei der organischen Carbonsäuren, wie z.B. Ameisensäure, Essigsäure, Glycolsäure, Milchsäure und deren Mischungen, d) Aluminiumsalze der organischen Carbonsäuren, e) organische und/oder anorganische Sulfate und/oder Hydrogensulfate und/oder Carbonate und/oder Hydrogencarbonate und/oder Erdalkalioxyde und/oder Erdalkalihydroxyde.

Es ist Aufgabe der Erfindung, ein Verfahren zum Beschleunigen des Abbindens eines Zements und einen Abbinde-Beschleuniger bereitzustellen, der unter Verwendung geringerer Mengen ein schnelles Abbinden des Zements, insbesondere Spritzbetons, ermöglicht. Diese Aufgabe wird erfindungsgemäß durch ein Verfahren gemäß Anspruch 1 und einen Abbinde-Beschleuniger gemäß Anspruch 2 gelöst. Vorteilhafte Weiterbildungen der Erfindung sind Gegenstand der korrespondierenden Unteransprüche.

Erfindungsgemäß wird ein Zweikomponenten-Beschleuniger verwendet, von dem eine erste Komponente im trockenen Zement zugemischt wird, während die zweite BeschleunigerKomponente erst beim Anmischen mit Wasser oder kurz vor dem Verarbeiten des Zements zugesetzt wird.

Durch das Trockenmischen des Zements mit der ersten Komponente wird der Zement konditioniert für die spätere Beimischung der zweiten Komponente, welche dann mit oder nach der Zugabe von Wasser zu einem wesentlich schnelleren Abbinden des Zements führt. Hierdurch wird erreicht, dass die Menge des benötigten Beschleunigers geringer gehalten werden kann.

Überdies wird die Homogenisierung beim Zumischen der geringeren Menge an Beschleuniger kurz vor der Verarbeitung des Zements schneller erreicht.

In Abhängigkeit von dem zu verwendenden Zement enthält die erste Komponente des Beschleunigers 40-90 %, vorzugsweise 50-70% Calciumhydroxid, 5-50%, vorzugsweise 15-40% Calciumformiat und/oder 5-20%, vorzugsweise 7-15% einer aliphatischen Hydroxy-di- oder - tricarbonsäure, z.B. Weinsäure. Es soll hier klar gestellt werden, dass alle % - und Verhältnisangaben sich auf die Masse der Komponenten beziehen.

Die zweite Komponente enthält 20-40%, vorzugsweise 25 bis 37% Aluminiumsulfat oder Aluminiumhydroxisulfat, 5-25%, vorzugsweise 10-21% Aluminiumhydroxid, 10-50%,vorzugsweise 28-43% H₂O und 5-45%, vorzugsweise 7 bis 20% einer Carbonsäure, organischen Sulfonsäure oder deren Salze.

Durch die erste Komponente des Beschleunigers werden Calciumionen in den Zement eingebracht, die bei der Zugabe der zweiten Beschleunigerkomponente mit den dort vorhandenen Aluminium- und Sulfationen reagieren. Somit kann das Bindeverhalten relativ unempfindlich gegenüber dem verwendeten Zementtyp gemacht werden. Ein Normalzement, d.h. also ein Zement mit ca. 9 bis 12 Gewichtsprozent Tricalciumaluminat kann ohne großen Aufwand mit einem normalen aluminiumhaltigen Beschleuniger beschleunigt werden. Ein C3A-freier Zement, sogenannte CEM I HS-Zemente oder auch Hochsulfat-beständige Zemente sind in ihrer Reaktivität stark eingeschränkt, da das Tricalciumaluminat als erste Phase abbindet. Hier kann durch die Zugabe der ersten Komponente die Reaktivität des Zements somit deutlich erhöht werden. Es ist nicht unbedingt notwendig, dass die erste Komponente dem Zement zuerst zugegeben wird. Wichtig ist, dass eine der beiden Komponenten erst mit der Wasserzumischung oder direkt vor der Verarbeitung, z.B. beim Spritzen an der Spritzdüse, zugesetzt wird.

Die notwendige Menge an Beschleuniger muss entsprechend den individuellen Bedingungen eingestellt werden und beträgt vorzugsweise zwischen 1 und 10 Gewichtsprozent bezogen auf die Masse des Zements bzw. 0,2 bis 5 % bezogen auf die Masse des Gesamtbaustoffs.

Calciumhydroxid ist der wesentliche Bestandteil der ersten Komponente und liegt in einer Menge von 40 bis 90 Gewichtsprozent vor, vorzugsweise zwischen 50 und 70 Gewichtsprozent. Als zweite Komponente kann Calciumformiat in einer Menge von 5 - 50 % und/oder eine alphatische Hydroxy-di- oder tricarbonsäure, z.B. Weinsäure, in einer Menge von 1 - 20 % vorgesehen sein. Das Calciumformiat ist vorzugsweise in einer Menge zwischen 10 und 40 % vorgesehen, während die Weinsäure vorzugsweise in einer Menge von 10 - 15 % in der ersten Komponente enthalten ist. Es soll klargestellt werden, dass alle Prozentangaben und Verhältnisse sich immer auf das Gewicht der entsprechenden Komponente beziehen.

Während die erste Komponente zur Einbringung der Calciumionen dient, dient die zweite Komponente zur Einbringung der Aluminium- und Sulfationen. Insofern sind die wichtigsten Bestandteile der zweiten Komponente Aluminiumsulfat oder Aluminiumhydroxysulfat und Wasser. Zusätzlich enthält die zweite Komponente Zusatzstoffe, die eine Festigkeitssteigerung mit sich bringen soll.

Die bei der Beschleunigungsreaktion ablaufende Reaktion stellt sich wie folgt dar:

Ein normaler Portlandzement enthält als Zusammensetzung den sogenannter Klinker und den Abbinde-Regulator, zum Beispiel Gips oder Anhydrit. Der Klinker besteht aus vier kristallographischen Hauptphasen:
1. Bis zu 50-75 Gewichtsprozent Tricalciumsilicat, C3S,
2. bis zu 5-20 Gewichtsprozent Dicalciumsilikat, C2S
3. bis zu 5-15 Gewichtsprozent Tricalciumaluminat, C3A und
4. bis zu 5-15 Gewichtsprozent Tetracalciumaluminatferrit C4AF.

Die Phase, die als erste in nennenswertem Umfang reagiert, ist das C3A. Dabei reagieren nur etwa 2 % des C3A ab. Es bildet sich hierbei auf der Oberfläche der C3A-Körner zusammen mit den Calcium- und Sulfationen aus dem Gips sogenanntes Ettringit (Trisulfat; 3CaO*Al2O3*3CaSO4*32H2O). Die Kristalle sind sehr klein und kurz, weshalb kein iibergreifendes Kristallgeflecht entsteht. Der Mörtel oder Beton ist deshalb verarbeitbar. Über mehrere Stunden findet eine Umkristallisierung statt, bei der aus den kurzen lange Nadeln werden, die miteinander vernetzen, wobei der Mörtel erstarrt. Ist bei der Startreaktion kein Gips oder Anhydrit anwesend, so bilden sich Tafeln von CAH-Phasen (Calciumaluminathydrat-Phasen) mit unterschiedlichen Zusammensetzungen aufgrund einer Vielzahl unterschiedlicher CAH-Phasen, welche miteinander vernetzen. Der Mörtel erstarrt daher. Liegt wenig Sulfat vor, bildet sich sogenanntes Monosulfat. Der Mörtel erstarrt dann ebenfalls. Daher ist ein sulfatfreier bzw. sulfatarmer Zement ein Schnellbinder, was vereinfacht die Funktionsweise eines Schnellzementes ist.

Durch Zugabe des erfindungsgemäßen Beschleunigers zu diesem System ist es möglich, CAH-Phasen und Monosulfat-Phasen bilden zu können, weil durch die zweite Komponente des Beschleunigers die benötigten Aluminium- und Sulfationen zugegeben werden, die aus dem C3A und aus der flüssigen Komponente des Beschleunigers stammen. Die benötigten Mengen an Calciumionen sind, wie oben bereits genannt, in der ersten bereits eingemischten Komponente des Beschleunigers in den Zement eingeführt worden. Dies ist insbesondere deshalb wichtig, weil aus den Phasen C3S und C2S nur geringe Mengen an Calcium herausgelöst werden können. Der Hauptteil der Calciumionen für die Frühreaktion, d.h. für die ersten Minuten bis zu 1 bzw. 2 Stunden stammt aus dem Calciumhydroxid bzw. aus dem Calciumformiat der ersten Beschleunigerkomponente. Hierbei ist anzumerken, dass Calciumformiat sehr leicht in Wasser löslich ist und dadurch schnell der Startreaktion zugeführt werden kann. Hierdurch wird erreicht, dass die Art des Zementes nicht so entscheidend für die ersten Abbindeprozesse ist. Die Formiationen wirken, wenn die ersten Caliumionen abreagiert haben, auf die Lösungsgeschwindigkeit des Calciumhydroxids. Wenn sich das Calciumhydroxid aufgelöst hat, wirken die Formiationen auf das C2S und C3S, welche Reaktion dann bereits im Stundenbereich stattfindet. Man hat durch die Formiationen Festigkeitssteigerungen im Stundenbereich, die bei den konventionellen Beschleunigern oft Probleme bereiten. Die konventionellen Beschleuniger reagieren am Anfang, bringen Festigkeit in Minuten- bis 1-StundenBereich, haben dann allerdings im Bereich von 3 bis 12 oder 16 Stunden keine großen Festigkeitssteigerungen mehr zu verzeichnen. Somit wird durch die vorliegende Erfindung eine Kombination von Aluminium- und Sulfationen der zweiten Beschleuniger kombiniert mit leicht löslichen Calciumverbindungen in der ersten Beschleunigerkomponente in Kombination mit dem Katalysator Formiat eine Festigkeitssteigerung in den ersten Stunden erreicht, die mit bekannten Breschleunigern nicht möglich war.

Man kann daher mit einem deutlich geringeren Einsatz einen erfindungsgemäßen Beschleuniger den Effekt erzielen, den herkömmliche Beschleuniger nur bei einem mengenmäßig wesentlich stärkerem Einsatz erbringen. Nachfolgend wird die Erfindung anhand von fünf Ausfuhrungsbeispielen kurz beschrieben.

Die nachfolgenden Beispiele der Erfindung zeigen sieben verschiedene Zusammensetzungen der zweiten Komponente. Gemeinsam ist allen Zusammensetzungen ein Aluminiumhydroxysulfat-Gehalt (Al2(SO4)3*14H2O) von 25 bis 35 %, ein Aluminiumhydroxit-Gehalt von 10 bis 15 %, ein Wassergehalt von 30 bis 45 %, vorzugsweise 35 bis 40 % und ein Gehalt an Carbonsäure, in diesen Beispielen Ameisensäure, zwischen 10 und 20 %, vorzugsweise zwischen 12 und 17 %.

Die sieben verschiedenen Rezepturen sind in der beiliegenden Tabelle wiedergegeben.

| | Al2(SO4)3 *14H2O | Al(OH)3 | FeSO4 *7H2O | Triethanolamin | Harnstoff | Glycin | H2O | Ameisensäure |
|---|---|---|---|---|---|---|---|---|
| Rez. 1 | 27,0 M.-% | 13,5 M.-% | 1,3 M.-% | | | | 40,0 M.-% | 12,2 M.-% |
| Rez. 2 | 30,0 M.-% | 12,7 M.-% | | 4.6 M.-% | | | 37,6 M.-% | 15,0 M.-% |
| Rez. 3 | 30,0 M.-% | 12,7 M.-% | | | 4.6 M.-% | | 37,6 M.-% | 15,0 M.-% |
| Rez. 4 | 32,8 M.-% | 13,1 M.-% | | 5.5 M.-% | | | 35,5 M.-% | 13.1 M.-% |
| Rez. 5 | 31,9 M.-% | 13,5 M.-% | | | | 3,7 M.-% | 39.9 M.-% | 16.0 M.-% |
| Rez. 6 | 35.7 M.-% | 14,8 M.-% | | | | | 42,7M-% | 6,9 M.-% |
| Rez. 7 | 37,1 M.-% | 20,0 M.-% | | | | | 28,6 M.-% | 14,3 M.-% |

Alle Rezepturen zeichnen sich durch eine hervorragende Reaktionskinetik mit der ersten Beschleunigerkomponente aus und führen zu einer sehr schnellen Erstarrung des Zements, unabhängig von der verwendeten Zementart. Die zweite Komponente kann noch 5 bis 50 % amorphe Kieselsäure enthalten, die den Effekt hat, dass die Bildung der Gitterstruktur-bildenden CSH-Phasen durch die SiO₂-Zufuhr deutlich verbessert wird. Dies hat zur Folge, dass sehr viel höhere Festigkeiten des abgebundenen Betons erhalten werden können.

Auch die der zweiten Komponente sonst zugesetzten Zusatzmittel wie Eisen (II) Verbindungen, wie z.B. Fe-Sulfat oder Fe-Carbonat, Alkanolamine, wie z.B. Ethanolamin (Diethanolamin oder Triethanolamin), Harnstoff und Glycin haben die Aufgabe, die Festigkeit des abgebundenen Baustoffes zu erhöhen.

Als Bestandteil der zweiten Komponente kann eine Carbonsäure, z.B. Monocarbonsäure, Dicarbonsäure, Hydroxycarbonsäure oder Hydroxydicarbonsäure verwendet werden oder achromatische Sulfonsäuren. Beispiele für Monocarbonsäuren sind zum Beispiel Ameisen-, Essig- und Proprionsäure. Beispiele für Dicarbonsäuren sind Bernsteinsäure und Maleinsäure. Als Hydroxycarbonsäure kann zum Beispiel Milchsäure oder Glycolsäure verwendet werden, während für eine Hydroxydicarbonsäure Apfelsäure oder Weinsäure verwendet werden kann. Als aromatische Sulfonsäure kann Benzolsulfonsäure oder Thulolsulfonsäure verwendet werden. Diese Säuren dienen als Art Katalysator in der Reaktion und führen zu einem besseren In-Lösung-Gehen des Calciums aus den Calcium enthaltenden Phasen in Zement und Abbinder.

Anstelle der Zugabe der ersten Komponente zum noch nicht mit Wasser angerührten Beton ist es auch möglich, die erste Komponente schon beim Anmischen des Transport- oder Ortbetons mit Wasser zuzugeben und die zweite Komponente dann direkt am Ort zum Beispiel in die Spritzdüse einer Spritzbeton-Spritzvorrichtung.

Insbesondere beim Trockenspritzen kann es vorteilhaft sein, zuerst die zweite Komponente im Trockenmörtelwerk zum Bindemittel und der Gesteinskörnung des Zements zuzugeben und die Komponente 1 anschließend als Slurry oder Suspension an der Düse zuzugeben. Hintergrund hierfür ist die Tatsache, dass beim Trockenspritzen sehr viel Staub entsteht. Wird nun die Komponente 1 als Pulver in Trockenmörtel gegeben, so gelangt sehr viel von dem Calciumhydroxid in die Luft, was einen sehr stark ätzenden Affekt hat und insbesondere bei dem Untertagepersonal zu großen Problemen führt. Deshalb ist es besser, die sehr viel verträglichere Komponente 2 in den Trockenmörtel einzurühren und die erste unter gesundheitlichem Aspekt sehr viel kritischere Komponente erst in einem bereits feuchten Zustand an der Düse, womit verhindert wird, dass Calciumhydroxid und somit ätzende Partikel in die Luft gelangen. Für Trockenbetonanwendungen, insbesondere beim Trockenspritzen, sollten von vornherein erst die Komponenten des Beschleunigers genommen werden, die einen lediglich geringen Anteil an Calciumhydroxid aufweisen, zum Beispiel lediglich 10 % Calciumhydroxid und dafür einen entsprechend höheren Anteil an Calciumformiat aufweisen.

Der wesentliche Vorteil, der durch die zeitversetzte Zugabe der beiden Komponenten erzielt wird, besteht darin, dass die eine Komponente bereits homogen in des Zementgemisch eingemischt ist, weshalb nach Zugabe der anderen Komponente bereits allein durch das Vorhandensein der anderen bereits eingemsichten Komponenten eine schnelle und homogen Reaktion stattfindet, die zu einem schnellen Abbinden führt.

Die eine Komponente kann so beim Trockenmischen der Zementzusammensetzung beigemengt werden, während die andere Komponente dann bei der Wasserzugabe oder der Verarbeitung des Zements, z.B. an der Spritzdüse beigesetzt wird.

Alternativ kann die eine Komponente auch bei der Wasserzugabe beigemengt werden, während die andere Komponente direkt, d.h. höchsten 15 min. vor der Verarbeitung, z.B. direkt an der Spritzdüse im Falle des Naß- oder Trockenspitzens von Beton zugegeben wird. Die Zugabe kann dann in Pulverform oder als Slurry erfolgen, je nach den Rahmenbedingungen der Verarbeitung.

## Patentansprüche

1. Verfahren zum Beschleunigen des Abbindens eines Zements unter Verwendung eines Zwei-Komponenten-Beschleunigers, mit folgenden Verfahrensschritten:
- Trockenmischen des Zementes mit Zuschlagsstoffen und einer ersten oder zweiten Komponente des Zwel-Komponenten-Beschleunigers,
- die andere Komponente des Zwei-Komponenten-Beschleunigers wird dem Zement in einem zeitlichen Abstand zur Zugabe der ersten Komponente mit oder nach der Zugabe von Wasser, kurz vor der Verarbeitung des Zements zugegeben,
wobei die erste Komponente
40-90 Gew.-% Calciumhydroxid,
5-50 Gew.-% Calciumformiat und/oder
1-20 Gew.-% einer aliphatischen Hydroxydi- oder tricarbonsäure
und die zweite Komponente
20-40 Gew.-% Aluminiumsulfat oder Aluminiumhydroxisulfat
5-25 Gew.-% Aluminiumhydroxid
10-50 Gew.-% H₂O und
5-45 Gew.-% einer Carbonsäure oder organischen Sulfonsäure oder deren Salze enthalten.

2. Zweikomponentenbeschleuniger für Zement umfassend eine erste Komponente mit folgenden Bestandteilen
| | |
|---|---|
| 40-90 Gew.-% | Calciumhydroxid, |
| 5-50 Gew.-% | Calciumformiat und/oder |
| 1-20 Gew.-% | einer aliphatischen Hydroxydl- oder -tricarbonsäure, |
und eine zweite Komponente umfassend folgende Bestandteile:
| | |
|---|---|
| Aluminiumsulfat oder Aluminiumhydroxysulfat | 20-40 Gew.-% |
| Aluminiumhydroxid | 5-20 Gew.-% |
| H₂O | 10-50 Gew.-% |
| Carbonsäure oder organische Sulfonsäure | 5 -25 Gew.-%. |

3. Beschleuniger nach Anspruch 2, **dadurch gekennzeichnet, dass** die Monocarbonsäure eine Ameisensäure ist.

4. Beschleuniger nach einem der Ansprüche 2 oder 3, **dadurch gekennzeichnet, dass** die zweite Komponente 2-50 Gew.-% einer Eisen (II) Verbindung, z.B. FeSO₄ oder FeCO₃ enthält.

5. Beschleuniger nach einem der Ansprüche 2 oder 3, **dadurch gekennzeichnet, dass** die zweite Komponente 2-10 Gew.-% Alkanolamine, z.B. Tri- oder Diethanolamin oder Ethanolamin enthält.

6. Beschleuniger nach einem der Ansprüche 2 oder 3, **dadurch gekennzeichnet, dass** die zweite Komponente 1-10 Gew.-% Harnstoff enthält.

7. Beschleuniger nach einem der Ansprüche 2 oder 3, **dadurch gekennzeichnet, dass** die zweite Komponente 5-10 Gew.-% Glycin enthält.

8. Beschleuniger nach einem der Ansprüche 2 oder 3, **dadurch gekennzeichnet, dass** die zweite Komponente 5-50% amorphe Kieselsäure enthält.

9. Beschleuniger nach einem der Ansprüche 2 bis 8, **dadurch gekennzeichnet, dass** die erste Komponente Kalksteinmehl in einem Gewichtsverhältnis Kalksteinmehl/allen anderen Bestandteilen der ersten Komponente 0,1 : 1 bis 10 : 1 enthält.

## Claims

1. A process to speed up curing of a cement using a two-component accelerator, comprising the following steps:
- dry-mixing the cement with aggregates and a first or second component of said two-component accelerator
- the other component of said two-component accelerator is added to the cement at a time later than the addition of said first component with or after the addition of water, shortly before the cement is worked wherein the first component consists of:
| | |
|---|---|
| 40-90 % by weight | calcium hydroxide, |
| 5-50 % by weight | calcium formiate and/or |
| 1-20 % by weight | of an aliphatic hydroxydi- or tricarboxylic acid |
and the second component consists of:
| | |
|---|---|
| 20-40 % by weight | aluminium sulphate or aluminium hydroxide sulphate, |
| 5-25 % by weight | aluminium hydroxide, |
| 10-50 % by weight | water and |
| 5-45 % by weight | carboxylic acid or organic sulfonic acids or their salts. |

2. A two-component cement curing accelerator comprising a first component consisting of :
| | |
|---|---|
| 40-90 % by weight | calcium hydroxide, |
| 5-50 % by weight | calcium formiate and/ or |
| 1-20 % by weight | of an aliphatic hydroxydi- or tricarboxylic acid |
and a second component consisting of:
| | |
|---|---|
| 20-40 % by weight | aluminium sulphate or aluminium hydroxide sulphate, |
| 5-20 % by weight | aluminium hydroxide, |
| 10-50 % by weight | water and |
| 5-25 % by weight | carboxylic acid or organic sulfonic acids. |

3. The accelerator as set forth in claim 2, **characterized in that** said monocarboxylic acid is a formic acid.

4. The accelerator as set forth in claim 2 or 3, **characterized in that** said second component consists of 2 - 50 % by weight of a ferrous (II) compound, e.g. FeSO₄ or FeCO₃.

5. The accelerator as set forth in claim 2 or 3, **characterized in that** said second component consists of 2 -10 % by weight alkanoamine, e.g. tri- or diethanolamine or ethanolamine.

6. The accelerator as set forth in claim 2 or 3, **characterized in that** said second component consists of 1 - 10 % by weight urea.

7. The accelerator as set forth in claim 2 or 3, **characterized in that** said second component consists of 5 - 10 % by weight glycine.

8. The accelerator as set forth in claim 2 or 3, **characterized in that** said second component consists of 5 - 50% amorphous silicic acid.

9. The accelerator as set forth in claim 2 to 8, **characterized in that** said first component consists of limestone in a weight ratio of limestone to all other constituents of the first component ranging from 0.1 : 1 to 10 : 1.

## Revendications

1. Procédé pour accélérer la prise de ciment à l'aide d'un accélérateur à deux composants, présentant les étapes de procédé suivants :
- mélange à sec du ciment avec des agrégats et un premier ou un second composant de l'accélérateur à deux composants,
- l'autre composant de l'accélérateur à deux composants est ajouté au ciment à un intervalle temporel par rapport au premier composant avec ou après l'ajout d'eau, juste avant la transformation du ciment,
le premier composant comprenant :
| | |
|---|---|
| 40 à 90 % en poids | d'hydroxyde de calcium, |
| 5 à 50 % en poids | de formiate de calcium et/ou |
| 1 à 20 % en poids | d'un acide hydroxydi- ou tricarbonique aliphatique |
et le second composant comprenant :
| | |
|---|---|
| 20 à 40 % en poids | de sulfate d'aluminium ou d'hydroxysulfate d'aluminium |
| 5 à 25 % en poids | d'hydroxyde d'aluminium |
| 10 à 50 % en poids | d'H₂O et |
| 5 à 45 % en poids | d'un acide carbonique ou d'un acide sulfonique organique ou leurs sels. |

2. Accélérateur de prise de ciment à deux composants comprenant un premier composant doté des éléments suivants :
| | |
|---|---|
| 40 à 90 % en poids | d'hydroxyde de calcium, |
| 5 à 50 % en poids | de formiate de calcium et/ou |
| 1 à 20 % en poids | d'un acide hydroxydi- ou tricarbonique aliphatique, |
et un second composant doté des éléments suivants :
| | |
|---|---|
| sulfate d'aluminium ou hydroxysulfate d'aluminium | 20 à 40 % en poids |
| hydroxyde d'aluminium | 5 à 20 % en poids |
| H₂O | 10 à 50 % en poids |
| acide carbonique ou acide sulfonique organique | 5 à 25 % en poids. |

3. Accélérateur selon la revendication 2, **caractérisé par le fait que** l'acide monocarbonique est un acide formique.

4. Accélérateur selon l'une des revendications 2 ou 3, **caractérisé par le fait que** le second composant comprend 2 à 50 % en poids de composé de fer (II), par ex. FeSO₄ ou FeCO₃.

5. Accélérateur selon l'une des revendications 2 ou 3, **caractérisé par le fait que** le second composant contient 2 à 10 % en poids d'alkanolamine, par ex. tri- ou diéthanolamine ou éthanolamine.

6. Accélérateur selon l'une des revendications 2 ou 3, **caractérisé par le fait que** le second composant contient 1 à 10 % en poids d'urée.

7. Accélérateur selon l'une des revendications 2 ou 3, **caractérisé par le fait que** le second composant contient 5 à 10 % en poids de glycine.

8. Accélérateur selon l'une des revendications 2 ou 3, **caractérisé par le fait que** le second composant contient 5 à 50 % en poids d'acide silicique amorphe.

9. Accélérateur selon l'une des revendications 2 à 8, **caractérisé par le fait que** le premier composant contient de la farine calcaire dans un rapport de poids farine calcaire/tous les autres éléments du premier composant de 0,1:1 à 10:1.
